# FASCICULE DE BREVET EUROPEEN

(11) **EP 1 997 064 B1**
(45) Date de publication et mention de la délivrance du brevet: **16.05.2012**
(21) Numéro de dépôt: 07730988.8
(22) Date de dépôt: 15.02.2007
(51) Int. Cl.: G07C 9/00, G06F 21/00

(54) **PROTECTION D'UN CONTROLE D'ACCES BIOMETRIQUE**
SCHUTZ EINER BIOMETRISCHEN ZUGANGSKONTROLLE
PROTECTION OF A BIOMETRIC ACCESS CONTROL

(30) Priorité: 03.03.2006 FR 0601933
(43) Date de publication de la demande: 03.12.2008
(73) Titulaire: MORPHO, 75015 Paris (FR)
(72) Inventeur: CHABANNE Hervé, c/o SAGEM SECURITE, 75015 Paris (FR)
(74) Mandataire: Cabinet Plasseraud
(86) Numéro de dépôt international: PCT/FR2007/000277
(87) Numéro de publication internationale: WO 2007/101922

(56) Documents cités:
- EP-A- 1 302 907
- WO-A-01/99337
- WO-A2-02/095657
- FR-A- 2 861 482
- US-B1- 6 836 554

## Description

La présente invention concerne le contrôle d'accès, et plus particulièrement le contrôle d'accès basé sur une analyse biométrique, c'est-à-dire une analyse de caractéristiques physiques individuelles.

Afin de garantir la sécurité de certaines informations un contrôle d'accès des personnes peut être mis en oeuvre sur la base d'une analyse biométrique des personnes. Ces contrôles peuvent être basés sur une analyse de caractéristiques morphologiques, telles que par exemple des empreintes digitales, de la rétine, de l'iris ou du visage, ou encore sur une analyse de caractéristiques comportementales, telles que par exemple des caractéristiques relatives à une dynamique de la signature, ou encore à une dynamique de frappe sur un clavier. Ces contrôles peuvent également être basés sur une combinaison de ces différents types d'analyse.

La mise en oeuvre de tels contrôles d'accès a généralement pour objectif la protection d'informations auxquelles seul un groupe défini de personnes est autorisé à accéder. Ces informations peuvent être localisées par exemple sur un site physique et dans ce cas le contrôle d'accès consiste à contrôler l'accès physique d'une personne sur ce site. Elles peuvent également être accessibles par un système informatique et dans ce cas le contrôle d'accès consiste à contrôler l'accès à ce système informatique.

Quelque soit le type d'informations et le type d'accès à ces informations, un système de contrôle biométrique comprend généralement un serveur de contrôle d'accès qui gère une base de données stockant des signaux de comparaison correspondant respectivement à des caractéristiques propres des personnes autorisées à accéder à ces informations. Il comprend également une pluralité de capteurs de contrôle d'accès qui sont adaptés pour capter un signal biométrique à contrôler relativement à une personne qui souhaite accéder aux informations, et pour coopérer avec un dispositif de transmission de sorte à transmettre le signal biométrique capté au serveur de contrôle. Par exemple, lorsque le contrôle d'accès biométrique est basé sur des caractéristiques d'une empreinte, les signaux de comparaison correspondent à des images numériques d'empreintes du groupe de personnes autorisées à accéder aux informations ou personnes autorisées par la suite. Ainsi, lors d'un contrôle d'accès d'une personne, cette dernière positionne son doigt sur un des capteurs de contrôle d'accès du système. Une image de l'empreinte de cette personne est alors captée, puis transmise sous forme d'un signal biométrique au serveur de contrôle qui est ensuite en mesure de comparer le signal biométrique capté reçu et les signaux de comparaison stockés dans la base de données, afin de déterminer si la personne souhaitant accéder aux informations fait partie du groupe de personnes autorisées à le faire.

Un signal biométrique comprend des caractéristiques individuelles qui n'évoluent pas, ou quasiment pas, avec le temps. Ainsi, il est important de protéger le caractère confidentiel de tels signaux biométriques dans de tels systèmes de contrôle d'accès.

A cet effet le document US 6 836 554 divulgue un système de contrôle dans lequel les signaux de comparaison et les signaux biométriques captés à contrôler sont stockés et manipulés sous une forme transformée, obtenue par application au signal biométrique capté d'une fonction de transformation non inversible. Plus précisément, afin que le serveur de contrôle apprenne les signaux de comparaison auxquels seront comparés les signaux reçus lors d'un contrôle d'accès, le capteur capte, dans une phase d'initialisation, un signal biométrique d'une personne autorisée, puis ce signal capté est transformé par application d'une fonction de transformation correspondant à la personne contrôlée, avant d'être envoyé ainsi transformé à destination du serveur de contrôle. Ce dernier le stocke afin de pouvoir effectuer un contrôle d'accès par comparaison du signal reçu et des signaux stockés.

De cette façon, le serveur stocke directement les signaux de comparaison sous une forme transformée qui correspond à la forme selon laquelle il reçoit également les signaux captés respectifs.

Ainsi, un potentiel attaquant ne peut intercepter qu'un signal biométrique transformé puisque les signaux stockés et échangés le sont sous une forme transformée. En outre, à partir de la forme transformée d'un signal biométrique intercepté, un potentiel attaquant n'est pas en mesure de récupérer le signal biométrique original puisque la fonction de transformation qui a été appliquée présente un caractère non inversible.

En revanche, si un potentiel attaquant récupère un signal de comparaison dans la base de données ou encore intercepte un signal biométrique à contrôler au cours de sa transmission entre un capteur et le serveur de contrôle, il est alors en mesure de rejouer ce signal biométrique transformé intercepté dans n'importe quel contexte afin d'accéder aux informations protégées.

Le document US 6 836 554 propose, dans le cas où la sécurité d'un tel système est compromise par une attaque basée ainsi sur un rejeu de signal biométrique transformé, de remplacer la fonction de transformation correspondante au signal biométrique transformé par une nouvelle fonction de transformation.

Toutefois, dans un tel cas, il est alors prévu que le serveur apprenne le nouveau signal de comparaison correspondant à une personne autorisée, comme dans la phase d'initialisation décrite ci-avant. Il en résulte une complexité et une lourdeur d'une telle gestion de changement de fonction de transformation, puisqu'une nouvelle saisie du signal de comparaison est alors requise.

Le document WO 02/095657 propose bien une méthode pour éviter le rejeu d'un signal biométrique transmis en utilisant des fonctions à usage unique mais ces fonctions sont inversibles.

La présente invention vise à pallier les inconvénients précités.

Un premier aspect de la présente invention propose un procédé de contrôle d'accès dans un système de contrôle d'accès comprenant un serveur de contrôle d'accès adapté pour contrôler un accès, au moins un capteur de signal biométrique ; et un dispositif d'interface adapté pour être en relation, d'une part, avec le serveur de contrôle et, d'autre part, avec le capteur.

L'accès contrôlé est autorisé à au moins une personne à laquelle est associé un signal de référence comprenant des informations biométriques correspondantes.

Le serveur de contrôle et le dispositif d'interface, d'une part, gèrent un paramètre commun prenant des valeurs différentes au cours du temps, et, d'autre part, stockent respectivement une première et une seconde fonction de transformation non inversible, lesdites première et seconde fonctions étant paramétrées en fonction au moins du paramètre commun.

Le procédé comprend les étapes suivantes :
/a/ au niveau du capteur, capter un signal biométrique et fournir le signal biométrique capté au dispositif d'interface ;
/b/ au niveau du dispositif d'interface, obtenir un signal biométrique transformé en appliquant la première fonction de transformation à un élément parmi un groupe comprenant au moins une caractéristique issue dudit signal biométrique capté et ledit signal biométrique capté ; et transmettre le signal biométrique transformé à destination du serveur de contrôle ;
/c/ au niveau du serveur de contrôle, effectuer une comparaison du signal biométrique transformé avec au moins un signal de comparaison, le signal de comparaison correspondant à un signal résultant de l'application de la seconde fonction de transformation à un signal initial issu du signal de référence ; et
/d/ sur la base de la comparaison, décider si un accès est autorisé.

Grâce à ces dispositions, étant donné que la première fonction de transformation appliquée au signal biométrique capté et la seconde fonction de transformation appliquée au signal initial issu du signal de référence sont toutes les deux déterminées en fonction d'un paramètre commun dont la valeur évolue en fonction du temps, une attaque basée sur le rejeu d'un signal biométrique transformé intercepté peut avantageusement être évitée. En effet, à chaque changement de valeur du paramètre commun, la fonction de transformation appliquée peut ainsi correspondre à une transformation différente de celle qui vient d'être appliquée pour le contrôle précédent. Cette fonction de transformation paramétrée de manière différente, est déterminée à la fois du côté de la personne à contrôler et du côté du serveur de contrôle. Par conséquent, pour une même personne contrôlée à différents moments, des signaux biométriques transformés ou déformés de manière différente sont traités selon un tel contrôle, et il est de ce fait impossible d'attaquer un tel procédé sur la base du rejeu d'un signal biométrique transformé intercepté.

Dans un tel contexte, un changement de transformation à appliquer à une image captée est aisé à mettre en oeuvre et ne nécessite pas une nouvelle saisie d'un signal biométrique de référence à chaque fois, tel que cela est le cas dans l'art antérieur.

La première fonction de transformation est adaptée pour être appliquée soit directement au signal biométrique capté par le capteur, soit pour être appliquée à une ou plusieurs caractéristiques biométriques issues du signal biométrique capté, c'est-à-dire extraites du signal biométrique capté, par exemple par l'utilisation d'un algorithme connu de l'homme du métier.

Le signal initial ou les signaux initiaux obtenus du côté du serveur correspondent soit à des signaux directement captés, soit à des caractéristiques extraites de signaux biométriques captés, en fonction de l'élément du groupe considéré auquel est appliquée la première fonction de transformation.

Dans un mode de réalisation de la présente invention, il est possible de déterminer une évolution du paramètre commun permettant de modifier, pour chaque contrôle d'accès, la transformation à appliquer au signal biométrique capté par le capteur à partir d'une personne. On peut dans certains cas prévoir une évolution moins rapide des valeurs du paramètre commun. Cette évolution du paramètre commun peut avantageusement être déterminée en fonction du niveau de sécurité que l'on souhaite atteindre dans le système de contrôle considéré.

Dans un mode de réalisation de la présente invention, les valeurs du paramètre commun au serveur de contrôle et au dispositif d'interface sont fonction des valeurs d'un compteur, géré au niveau du dispositif d'interface et du serveur, du nombre de signaux biométriques transformés qui sont respectivement transmis et reçus par le dispositif d'interface et le serveur de contrôle.

Dans ce contexte, les compteurs gérés respectivement par le serveur et par le capteur présentent des valeurs sensiblement synchrones et peuvent donc avantageusement être utilisées pour déterminer la valeur du paramètre commun. On peut prévoir que, régulièrement, après N signaux biométriques captés et transmis depuis le capteur à destination du serveur, le paramètre commun est incrémenté, N étant un nombre entier pouvant avantageusement être défini en fonction du niveau de sécurité recherché pour un tel contrôle d'accès.

Dans une variante, le serveur de contrôle d'accès et le capteur étant synchronisés sur une référence temporelle commune, les valeurs du paramètre commun sont fonction de cette référence temporelle commune.

Ainsi, on peut prévoir d'incrémenter le paramètre commun après chaque période de temps T, cette période T pouvant être définie en fonction du niveau de sécurité recherché dans le système de contrôle considéré.

Les valeurs du paramètre commun peuvent correspondre à des valeurs saisies au niveau du dispositif d'interface. Dans ce cas, chaque nouvelle valeur du paramètre commun, utilisée pour paramétrer la fonction de transformation, est transmise depuis le dispositif d'interface au serveur de contrôle.

Dans un mode de réalisation de la présente invention, le système de contrôle d'accès contrôle l'accès à une pluralité de types d'applications, comme par exemple, un accès physique sur un site physique, un accès à une base de données informatiques dans un réseau informatique, et un accès à un service bancaire également dans un réseau informatique. Dans un tel contexte, une pluralité de couples, formés d'une part par une première fonction de transformation non inversible au niveau du dispositif d'interface et d'autre part par une seconde fonction de transformation non inversible au niveau du serveur de contrôle, sont respectivement associés à ladite pluralité de types d'applications. Ainsi, avantageusement, on peut obtenir un niveau de sécurité important sans pour autant modifier à chaque contrôle le paramétrage de la fonction de transformation, puisque chaque application de type différent peut alors être contrôlée en mettant en oeuvre une fonction de transformation différente. Par conséquent, si un potentiel attaquant intercepte un signal transformé à contrôler, il n'est pas en mesure de 'rejouer' ce signal transformé intercepté pour accéder à une application contrôlée d'un autre type du système.

Dans ce contexte, on peut prévoir, en outre, que la pluralité de couples de fonctions de transformation non inversibles est respectivement associée à des paramètres communs différents.

Le signal initial peut comprendre le signal de référence. Dans ce cas, l'application de la première et l'application de la seconde fonction de transformation paramétrées non inversibles sont équivalentes.

Dans un mode de réalisation de la présente invention, le signal initial issu du signal de référence, correspondant à la, ou aux personnes autorisées, est obtenu par application d'une fonction de transformation initiale non inversible au signal de référence, de sorte que le signal initial est un signal pré-transformé. Dans ce contexte, la première fonction de transformation équivaut à une combinaison de la seconde fonction de transformation et de la fonction de transformation initiale.

En procédant de cette façon, les signaux biométriques de référence relatifs aux personnes pour lesquelles l'accès est autorisé sont stockés sous une forme déjà pré-transformée. Un tel mode de réalisation permet de protéger la confidentialité des caractéristiques biométriques qui, elles, ne peuvent pas être modifiées pour une personne donnée.

Dans un mode de réalisation de la présente invention, un identifiant est associé au dispositif d'interface et/ou à la au moins une personne à laquelle l'accès est autorisé et le serveur de contrôle gère une association du au moins un signal de comparaison audit identifiant de cette personne. Dans ce cas, le procédé peut comprendre en outre, avant l'étape /c/, les étapes suivantes :
- obtenir au niveau du dispositif d'interface un identifiant correspondant au signal biométrique capté ;
- transmettre au serveur de contrôle ledit identifiant ; et
- au niveau du serveur de contrôle, récupérer le signal de comparaison associé audit identifiant reçu.

Ainsi, grâce à la gestion par le serveur de contrôle d'une association d'un signal de comparaison correspondant à une personne pour laquelle l'accès est autorisé et un identifiant de cette personne et/ou du dispositif d'interface, le serveur est en mesure de récupérer de manière plus efficace le signal de comparaison dans sa base de données en fonction de l'identifiant qu'il reçoit depuis la personne qui est en cours de contrôle dans le système de contrôle.

Dans un tel mode de réalisation de la présente invention, le système de contrôle peut alors être utilisé en tant que système d'authentification d'une personne. En effet, dans une telle mise en oeuvre, le serveur est en mesure d'authentifier la personne en cours de contrôle sur la base de l'identifiant et du signal biométrique transformé reçu.

Le système de contrôle selon un mode de réalisation de la présente invention peut également être utilisé en tant que système d'identification. Dans ce cas, le signal initial obtenu par le serveur est associé à un identifiant de la personne pour laquelle l'accès est autorisé. Ainsi, le serveur est en mesure d'identifier une personne sur la base d'un signal biométrique transformé. En effet, lorsque le serveur décide que le signal biométrique transformé reçu correspond à un signal initial alors il est en mesure de récupérer un identifiant de la personne correspondante en cours de contrôle et de ce fait d'identifier cette personne.

Avantageusement, dans le cas d'une identification où les transformations appliquées aux images captées changent à chaque nouveau contrôle d'accès d'une même personne, les informations qui transitent entre le côté utilisateur et le serveur ne permettent pas à un potentiel attaquant de détecter quand une même personne est identifiée par un système selon la présente invention.

Un deuxième aspect de la présente invention propose un dispositif d'interface dans un système de contrôle d'accès comprenant, d'une part, en outre un serveur de contrôle d'accès adapté pour contrôler un accès et, d'autre part, au moins un capteur de signal biométrique. L'accès est autorisé à au moins une personne à laquelle est associée un signal de référence comprenant des informations biométriques correspondantes. Le dispositif d'interface peut comprendre :
- une unité de gestion adaptée pour gérer, d'une part, un paramètre, commun avec le serveur de contrôle, prenant des valeurs différentes au cours du temps, et d'autre part, une fonction de transformation non inversible, ladite fonction étant paramétrée en fonction au moins dudit paramètre commun ;
- une première unité d'interface adaptée pour recevoir un signal biométrique capté depuis le capteur ;
- une unité de transformation adaptée pour transformer un signal biométrique capté en un signal biométrique transformé en appliquant la fonction de transformation à un élément parmi un groupe comprenant au moins une caractéristique issue dudit signal biométrique capté et ledit signal biométrique capté ; et
- une seconde unité d'interface adaptée pour coopérer avec un dispositif de transmission (15) adapté pour transmettre un signal biométrique transformé par l'unité de transformation à destination du serveur de contrôle.

Les valeurs du paramètre commun peuvent évoluées comme énoncé selon le premier aspect de la présente invention.

Dans un mode de réalisation de la présente invention, la seconde unité d'interface du dispositif d'interface est adaptée pour coopérer avec un dispositif de transmission afin de transmettre le signal transformé, ce dispositif de transmission pouvant être, soit compris dans le dispositif d'interface, soit encore extérieur à ce dispositif d'interface.

Un troisième aspect de la présente invention propose un capteur de signal biométrique comprenant un dispositif d'interface selon le deuxième aspect de la présente invention.

Ce capteur peut comprendre le dispositif de transmission du signal biométrique transformé à destination du serveur de contrôle.

Un quatrième aspect de la présente invention propose un serveur de contrôle d'accès dans un système de contrôle d'accès comprenant en outre au moins un capteur de signal biométrique et un dispositif d'interface adapté pour être en relation, d'une part, avec le serveur de contrôle et, d'autre part, avec le capteur.

Le serveur de contrôle peut comprendre :
- une unité d'interface adaptée pour recevoir un signal biométrique transformé fourni par ledit dispositif d'interface ;
- une unité de gestion adaptée pour gérer, d'une part, un paramètre, commun avec le dispositif d'interface, prenant des valeurs différentes au cours du temps, et d'autre part, une fonction de transformation non inversible, ladite fonction de transformation étant paramétrée en fonction au moins dudit paramètre commun audit signal initial ;
- une unité de transformation adaptée pour transformer au moins un signal initial issu du au moins un signal de référence en au moins un signal de comparaison par application de la fonction de transformation ;
- une unité de comparaison adaptée pour effectuer une comparaison du signal biométrique transformé reçu avec le au moins un signal de comparaison ; et
- une unité de décision adaptée pour décider si un accès est autorisé sur la base de la comparaison effectuée par l'unité de comparaison.

Un cinquième aspect de la présente invention propose un système de contrôle d'accès comprenant :
- un capteur de signal biométrique selon le troisième aspect de la présente invention ;
- un dispositif d'interface selon le deuxième aspect de la présente invention ; et
- un serveur de contrôle d'accès selon le quatrième aspect de la présente invention.

D'autres aspects, buts et avantages de l'invention apparaîtront à la lecture de la description d'un de ses modes de réalisation.

L'invention sera également mieux comprise à l'aide des dessins, sur lesquels :
- la figure 1 illustre une architecture de différentes entités comprises dans un système de contrôle d'accès selon un mode de réalisation de la présente invention ;
- la figure 2 illustre un réseau de capteurs dans un système de contrôle d'accès selon un mode de réalisation de la présente invention.

Dans les sections suivantes, on entend par les termes 'signal biométrique' un signal issu d'un capteur biométrique appliqué sur une personne.

Un tel signal biométrique peut correspondre à une image captée d'une empreinte de la personne considérée, ou encore à une image captée d'un iris, ou une image du visage ou d'une partie du visage de cette personne.

On entend par les termes 'signal de référence', un signal biométrique d'une personne pour laquelle l'accès contrôlé selon un mode de réalisation de la présente invention est autorisé. Un signal de référence est fourni par un capteur biométrique, sans qu'une fonction de transformation au sens de la présente invention ne soit appliquée.

On entend par les termes 'signal initial issu d'un signal de référence', soit directement le signal de référence, soit encore le signal de référence pré-transformé par application d'une transformation initiale.

Un signal initial est un signal dont dispose le serveur. Il peut par exemple être stocké dans une base de données gérée par le serveur ou encore être fourni au serveur par n'importe quel moyen de transmission.

Dans les sections suivantes, le paramètre commun est sensiblement synchronisé au niveau du dispositif d'interface et du serveur de contrôle de sorte que le même paramètre est utilisé au moment où un signal biométrique capté est transformé au niveau du dispositif d'interface et au moment où le signal ainsi transformé est reçu et traité au niveau du serveur de contrôle.

Une fonction de transformation non inversible au sens de la présente invention peut être n'importe quelle fonction non inversible qui permet de transformer ou encore déformer une image en une image déformée. On peut notamment utiliser une des fonctions de transformation décrites dans le document US 6 836 554.

Dans le cas où le capteur capte une image d'empreinte, la fonction de transformation peut être une fonction dont l'application consiste à une déformation de l'image dans le domaine spatial. On peut ainsi décomposer l'image à transformer en une pluralité de parties, puis à répartir lesdites parties d'images ainsi obtenues en une répartition spatiale différente spécifiée.

Ici, le paramètre commun peut, par exemple, servir à spécifier une nouvelle répartition des parties de l'image originale. Il peut également consister à définir dé nouvelles formes des différentes parties de l'image à répartir selon la répartition spécifiée. On peut également prévoir de prendre en compte en combinaison les deux paramètres communs évoqués ci-avant.

Dans le cas où le capteur capte une image du visage ou d'une partie de visage, la fonction de transformation peut aussi être une fonction de déformation de l'image captée dans le domaine spatial. L'image peut, ici aussi, être décomposée en une pluralité de parties. Puis, certains contours de ces parties ainsi obtenus peuvent être modifiés, impliquant ainsi une déformation différente des différentes parties pour lesquelles les contours ont été modifiés.

Ici, le paramètre commun peut, par exemple, correspondre au nombre de parties composant l'image à transformer. Il peut également correspondre à la modification imposée à certains au moins des contours de certaines des parties de l'image à transformer.

Dans le cas où le capteur capte une image de l'iris, la fonction de transformation peut également être une fonction de déformation de l'image captée dans le domaine spatial. On peut par exemple décomposer une vue de l'iris en une pluralité de secteurs angulaires. Puis, l'application de la fonction de transformation peut consister à modifier certains au moins des angles de ces secteurs angulaires ainsi obtenus, en réduisant certains angles et en augmentant certains autres.

Ici, le paramètre commun peut être utiliser pour déterminer un changement dans la réduction et/ou dans l'augmentation de certains de ces angles.

On peut prévoir de paramétrer une telle fonction de transformation par une pluralité de paramètres communs, tels que définis dans la présente description.

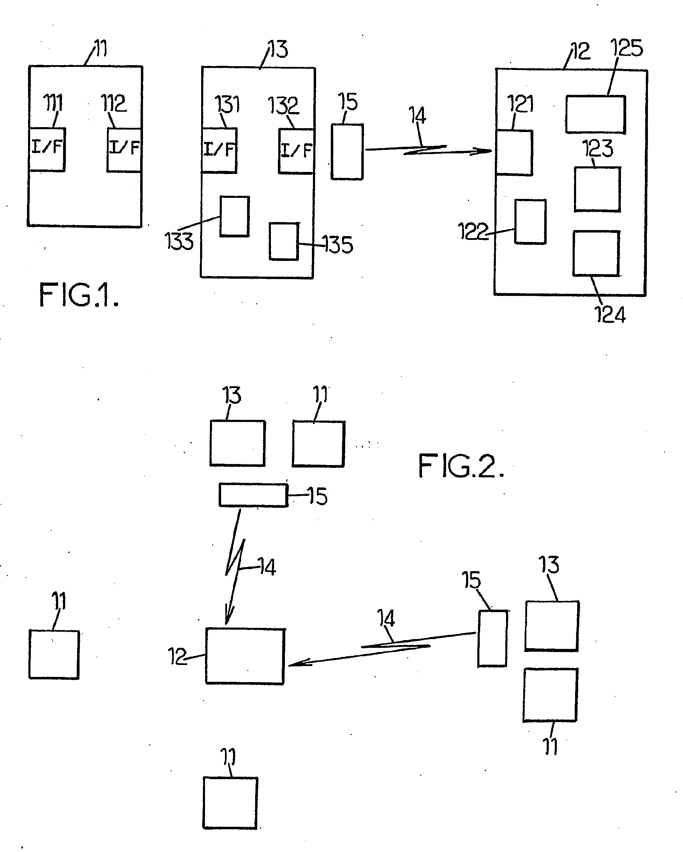

La figure 1 illustre une architecture de différentes entités comprises dans un système de contrôle d'accès selon un mode de réalisation de la présente invention.

Dans les sections suivantes, à titre d'exemple uniquement, la présente invention est décrite dans son application à un contrôle d'accès physique de personnes sur un site physique donné, par un contrôle biométrique basé sur des caractéristiques biométriques d'empreinte. Dans un tel contexte, un capteur de signal biométrique selon un mode de réalisation de la présente invention est placé par exemple à une porte d'accès à un bâtiment dont l'entrée est contrôlée selon un mode de réalisation de la présente invention. Ainsi, dans le cas où l'accès est autorisé, on peut prévoir l'ouverture de cette porte.

Un tel système de contrôle d'accès comprend un serveur de contrôle d'accès 12 qui peut disposer de signaux de comparaison destinés à être comparés à un signal transformé reçu à contrôler. Il comprend en outre un capteur de signal biométrique 11 et un dispositif d'interface 13.

Dans un tel système de contrôle d'accès, le capteur de signal biométrique 11 comprend une première unité d'interface 111 adaptée pour capter une image d'une empreinte d'une personne souhaitant accéder au bâtiment protégé selon un mode de réalisation de la présente invention. Il comprend en outre une seconde unité d'interface 112 adaptée pour fournir au dispositif d'interface 13 un signal biométrique ainsi capté.

Le dispositif d'interface 13 comprend une unité de gestion 133 adaptée pour gérer, d'une part, un paramètre commun avec le serveur de contrôle, prenant des valeurs différentes au cours du temps, et d'autre part, une première fonction de transformation non inversible, cette fonction étant paramétrée en fonction au moins du paramètre commun. Il comprend également une première unité d'interface 131 adaptée pour recevoir le signal biométrique capté depuis le capteur. Il comprend aussi une unité de transformation 135 adaptée pour transformer le signal biométrique capté reçu par la première unité d'interface en un signal biométrique transformé. Il comprend en outre une seconde unité d'interface 132 adaptée pour permettre la transmission du signal biométrique transformé par l'unité de transformation à destination du serveur de contrôle 12.

On peut prévoir que la seconde unité d'interface coopère avec un dispositif de transmission 15 adaptée pour réaliser effectivement la transmission du signal biométrique transformé à destination du serveur de contrôle. Ce dispositif de transmission 15 peut être localisée dans le capteur ou dans le dispositif d'interface, ou encore distincte du capteur 11 et du dispositif d'interface 13.

Un serveur de contrôle 12 selon un mode de réalisation de la présente invention peut comprendre une unité de gestion 123 adaptée pour gérer d'une part un paramètre, commun avec le dispositif d'interface 13, prenant des valeurs différentes au cours du temps, et d'autre part, une seconde fonction de transformation non inversible, cette fonction étant paramétrée en fonction au moins du paramètre commun.

Il comprend également une unité de transformation 122 adaptée pour transformer des signaux issus des signaux de référence en des signaux de comparaison respectifs par application de la seconde fonction de transformation.

Ce serveur 12 comprend en outre une unité d'interface 121 adaptée pour recevoir un signal biométrique transformé fourni par le dispositif d'interface 13. Il comprend aussi une unité de comparaison 124 adaptée pour effectuer une comparaison du signal biométrique transformé reçu avec les signaux de comparaison, ainsi qu'une unité de décision 125 adaptée pour décider si un accès est autorisé sur la base de la comparaison effectuée par l'unité de comparaison 124.

Dans un mode de réalisation de la présente invention, le capteur 11 et le dispositif d'interface 13 sont des entités différentes de sorte que, avantageusement, le dispositif d'interface est amovible et mobile de manière indépendante du capteur de signal biométrique 11. Ainsi, on peut prévoir que chaque personne souhaitant entrer dans le bâtiment dispose d'un tel dispositif d'interface 13.

Dans une variante, le dispositif d'interface 13 peut être compris dans le capteur 11 de sorte que les deux entités n'en forment qu'une. Dans ce cas, on peut prévoir que te capteur, et de ce fait le dispositif d'interface, est fixe au niveau de la porte d'entrée du bâtiment dont l'accès est protégé.

Dans ce dernier cas, le capteur peut être adapté pour recevoir le paramètre commun depuis la personne en cours de contrôle via une interface de saisie quelconque. Puis, ce paramètre est utilisé au niveau du dispositif d'interface de sorte à paramétrer la première fonction de transformation. Ensuite, ce paramètre est alors envoyé au serveur de sorte qu'il puisse lui aussi paramétrer la seconde fonction de transformation. Ainsi, le paramètre commun est saisi en premier lieu par la personne souhaitant accéder au bâtiment, puis il est envoyé au serveur de contrôle. En procédant de cette façon, les fonctions de transformation respectives peuvent être correctement paramétrées de sorte à, d'une part, fournir un signal biométrique capté transformé par la première fonction de transformation paramétrée par le paramètre commun au niveau du capteur et, d'autre part, à obtenir des signaux de comparaison correspondant aux signaux de référence transformés par l'application d'une fonction de transformation équivalente à la première fonction de transformation.

On peut prévoir que le serveur de contrôle 12 dispose directement des signaux de référence. Dans ce cas, l'application de la première fonction de transformation peut directement équivaloir à l'application de la seconde fonction de transformation.

Dans une variante, le serveur de contrôle peut disposer de signaux initiaux qui sont issus des signaux de référence, ces signaux initiaux correspondant aux signaux de référence pré-transformés par l'application d'une fonction de transformation initiale. Dans ce cas, on peut prévoir que l'application de la première fonction de transformation équivaut à l'application combinée de la seconde fonction et de la fonction de transformation initiale.

Ces signaux initiaux peuvent être à la disposition du serveur 12, par exemple, par une base de données dans laquelle ils sont stockées et à laquelle le serveur à accès, ou encore par tout autre moyen.

Dans un mode de réalisation de la présente invention, une personne dispose donc d'un dispositif d'interface 13, qu'elle connecte à un capteur de signal biométrique 11 situé près de la porte que la personne souhaite franchir. Puis, elle pose par exemple son index sur le capteur 11. Le capteur 11 capture une image de l'empreinte de l'index de cette personne. Puis, ce capteur 11 fournit cette image biométrique au dispositif d'interface 13 connecté, sous la forme d'un signal biométrique. Ce signal biométrique est reçu au niveau de la première unité d'interface 131 du dispositif d'interface 13.

Il est ensuite fourni à l'unité de transformation 135. Cette dernière transforme ce signal biométrique capté par application de la première fonction de transformation, paramétrée avec la valeur du paramètre commun fournie par l'unité de gestion 133. La valeur de ce paramètre commun évolue avec le temps de manière sensiblement synchrone au niveau de l'unité de gestion 133 du dispositif d'interface 13 et au niveau de l'unité de gestion 123 du serveur de contrôle 12.

On obtient ainsi un signal biométrique transformé, qui est transmis au niveau de la seconde unité d'interface 132. Cette unité d'interface est adaptée pour coopérer avec un dispositif de transmission 15 qui peut être soit co-localisé à cette seconde unité d'interface, soit une entité distincte du dispositif d'interface.

Puis, ce signal biométrique transformé 14 est transmis au serveur de contrôle 12. Afin de traiter ce signal, biométrique transformé, le serveur de contrôle 12 obtient des signaux de référence transformés selon une fonction de transformation similaire à celle qui a été appliquée au niveau du dispositif d'interface 13.

A cet effet, on peut prévoir que le serveur stocke, ou tout au moins a accès aux signaux de référence des personnes autorisées et qu'il dispose de la même fonction de transformation que celle qui est gérée par l'unité de gestion du dispositif d'interface 13. Dans ce cas, il applique aux signaux de référence cette fonction de transformation paramétrée avec le paramètre commun. Il en résulte des signaux de comparaison correspondant aux signaux de référence transformés de la même manière que le signal biométrique capté à contrôler a été transformé du côté utilisateur.

Ainsi, le serveur compare le signal transformé reçu et les signaux de comparaison décrits ci-avant et en déduit si la personne en cours de contrôle fait partie des personnes autorisées ou non. Cette comparaison visant à comparer deux images captées potentiellement de manière différente, puis transformées, n'est pas une comparaison stricte.

Dans une autre variante, le serveur de contrôle 12 dispose seulement de signaux de référence sous une forme pré-transformée, correspondant à l'application d'une fonction de transformation initiale sur les signaux de référence non inversible. Ainsi, la protection est accrue puisque, même si un attaquant peut récupérer un des signaux dont dispose le serveur de contrôle, il n'a pas accès au signal de référence original.

Dans cette variante, l'unité de gestion 123 du serveur de contrôle 12 gère une seconde fonction de transformation qui diffère de la première fonction du dispositif d'interface 13. En effet, plus précisément, la première fonction de transformation équivaut à une combinaison de la seconde fonction de transformation et de la fonction de transformation initiale. Toutefois, la première et la seconde fonction de transformation sont ici aussi paramétrées de la même façon par le paramètre commun.

Dans un mode de réalisation de la présente invention, le système de contrôle d'accès est en outre basé sur un identifiant de la personne à contrôler. Une telle variante permet d'améliorer les performances de traitement de signal au niveau du serveur de contrôle 12.

En effet, dans ce cas, le serveur de contrôle gère une association des signaux de comparaison aux identifiants respectifs des personnes autorisées dans le système de contrôle. Puis, la personne en cours de contrôle fournit son identifiant au serveur par l'intermédiaire du dispositif d'interface par exemple, ou encore par tout autre interface offerte à la personne au niveau de la porte d'entrée contrôlée. Ainsi, dans de telles conditions, le serveur de contrôle est en mesure de récupérer le signal de comparaison associé à l'identifiant reçu, sans avoir à comparer le signal biométrique capté transformé reçu avec une pluralité de signaux de comparaison.

La figure 2 illustre un réseau de capteurs dans un système de contrôle d'accès selon un mode de réalisation de la présente invention. Ainsi, dans ce contexte, chacun des capteurs du système peut être positionné à des portes d'entrée différentes d'un site physique ou encore, parmi ces capteurs certains peuvent être co-localisés à des stations informatiques pour réaliser un contrôle d'accès à des données informatiques par exemple.

Deux d'entre eux sont en cours de réalisation d'un contrôle d'accès et des dispositifs d'interface 13 leur sont connectés.

On peut prévoir que des fonctions de transformation non inversibles différentes sont utilisées en fonction des applications contrôlées.

Dans un système de contrôle selon un mode réalisation de la présente invention, en fonction du paramètre commun, on est en mesure de modifier la transformation des signaux biométriques manipulés au cours des contrôles d'accès successifs pour une même personne, de sorte à améliorer la fiabilité des contrôles. En effet, en fonction du niveau de fiabilité recherché, on peut définir une évolution plus ou moins rapide du paramètre commun.

Avantageusement, on peut même aisément définir une variation du paramètre commun à chacun des contrôles exécutés pour une même personne de sorte à garantir une protection complète contre les attaques basées sur le rejeu d'un signal biométrique transformé intercepté.

## Revendications

1. Procédé de contrôle d'accès dans un système de contrôle d'accès (10) comprenant :
un serveur de contrôle d'accès (12) adapté pour contrôler un accès ;
au moins un capteur de signal biométrique (11) ; et
un dispositif d'interface (13) adapté pour être en relation, d'une part, avec le serveur de contrôle et, d'autre part, avec le capteur ;
ledit accès étant autorisé à au moins une personne à laquelle est associée un signal de référence comprenant des informations biométriques correspondantes ;
le serveur de contrôle et le dispositif d'interface, d'une part, gérant un paramètre commun prenant des valeurs différentes au cours du temps, et,
d'autre part, respectivement une première et une seconde fonction de transformation non inversible, lesdites première et seconde fonctions de transformation étant paramétrées en fonction au moins dudit paramètre commun ;
ledit procédé comprenant les étapes suivantes :
/a/ au niveau du capteur, capter un signal biométrique et fournir ledit signal biométrique capté au dispositif d'interface ;
/b/ au niveau du dispositif d'interface, obtenir un signal biométrique transformé en appliquant la première fonction de transformation à un élément parmi un groupe comprenant au moins une caractéristique issue dudit signal biométrique capté et ledit signal biométrique capté ; et transmettre (14) ledit signal biométrique transformé à destination du serveur de contrôle ;
/c/ au niveau du serveur de contrôle, effectuer une comparaison du signal biométrique transformé avec au moins un signal de comparaison, ledit signal de comparaison correspondant à un signal résultant de l'application de la seconde fonction de transformation à un signal initial issu du signal de référence ; et
/d/ sur la base de ladite comparaison, décider si un accès est autorisé.

2. Procédé de contrôle d'accès selon la revendication 1, dans lequel les valeurs du paramètre commun sont fonction des valeurs d'un compteur, géré au niveau du dispositif d'interface et du serveur, du nombre de signaux biométriques transformés qui sont respectivement transmis et reçus par le dispositif d'interface et le serveur.

3. Procédé de contrôle d'accès selon l'une quelconque des revendications précédentes, dans lequel, le serveur de contrôle d'accès et le dispositif d'interface étant synchronisés sur une référence temporelle commune, les valeurs du paramètre commun sont fonction de la valeur de la référence temporelle commune.

4. Procédé de contrôle d'accès selon l'une quelconque des revendications précédentes, dans lequel les valeurs du paramètre commun sont saisies au niveau du dispositif d'interface, et dans lequel chaque nouvelle valeur du paramètre commun est transmise au serveur de contrôle.

5. Procédé de contrôle d'accès selon l'une quelconque des revendications précédentes, dans lequel le système de contrôle d'accès contrôle l'accès à une pluralité de types d'applications, et dans lequel une pluralité de couples d'une première fonction de transformation non inversible au niveau du dispositif d'interface et d'une seconde fonction de transformation non inversible au niveau du serveur de contrôle sont respectivement associés à ladite pluralité de types d'applications.

6. Procédé de contrôle d'accès selon l'une quelconque des revendications précédentes, dans lequel le signal initial comprend le signal de référence et dans lequel l'application de la première et l'application de la seconde fonction de transformation paramétrées non inversibles sont équivalentes.

7. Procédé de contrôle d'accès selon l'une quelconque des revendications précédentes, dans lequel le signal initial issu du signal de référence, correspondant à la au moins une personne autorisée, est obtenu par application d'une fonction de transformation initiale non inversible au signal de référence ; et dans lequel la première fonction de transformation équivaut à une combinaison de la seconde fonction de transformation et de ladite fonction de transformation initiale.

8. Procédé de contrôle d'accès selon l'une quelconque des revendications précédentes, dans lequel un identifiant est associé au dispositif d'interface et/ou à la au moins une personne à laquelle l'accès est autorisé et dans lequel le serveur de contrôle gère une association du au moins un signal de comparaison audit identifiant ;
ledit procédé comprenant en outre, avant l'étape /c/, les étapes suivantes :
- obtenir au niveau du dispositif d'interface un identifiant correspondant au signal biométrique capté ;
- transmettre au serveur de contrôle ledit identifiant ; et
- au niveau du serveur de contrôle, récupérer le signal de comparaison associé audit identifiant reçu.

9. Dispositif d'interface (13) dans un système de contrôle d'accès (10) comprenant en outre, d'une part, un serveur de contrôle d'accès (12) adapté pour contrôler un accès ; et, d'autre part, au moins un capteur de signal biométrique (11) ;
ledit accès étant autorisé à au moins une personne à laquelle est associé un signal de référence comprenant des informations biométriques correspondantes ;
ledit dispositif d'interface comprenant :
- une unité de gestion (133) adaptée pour gérer, d'une part un paramètre, commun avec le serveur de contrôle, prenant des valeurs différentes au cours du temps, et d'autre part, une fonction de transformation non inversible, ladite fonction de transformation étant paramétrée en fonction au moins dudit paramètre commun;
- une première unité d'interface (131) adaptée pour recevoir un signal biométrique capté depuis le capteur ;
- une unité de transformation (135) adaptée pour transformer un signal biométrique capté en un signal biométrique transformé en appliquant la fonction de transformation à un élément parmi un groupe comprenant au moins une caractéristique issue dudit signal biométrique capté et ledit signal biométrique capté; et
- une seconde unité d'interface (132) adaptée pour coopérer avec un dispositif de transmission (15) adapté pour transmettre un signal biométrique transformé par l'unité de transformation à destination du serveur de contrôle.

10. Dispositif d'interface (13) selon la revendication 9, dans lequel les valeurs du paramètre commun sont fonction des valeurs d'un compteur, géré par l'unité de gestion (133), du nombre de signaux biométriques transformés qui sont respectivement transmis au serveur.

11. Dispositif d'interface (13) selon la revendication 9 ou 10, dans lequel, le serveur de contrôle d'accès et le dispositif d'interface étant synchronisés sur une référence temporelle commune, les valeurs du paramètre commun sont fonction de la valeur de la référence temporelle commune.

12. Dispositif d'interface (13) selon l'une quelconque des revendications 9 à 11, dans lequel les valeurs du paramètre commun sont saisies au niveau du dispositif d'interface, et dans lequel chaque nouvelle valeur du paramètre commun est transmise au serveur de contrôle.

13. Capteur de signal biométrique (11) comprenant un dispositif d'interface selon l'une quelconque des revendications 9 à 12.

14. Serveur de contrôle d'accès (12) dans un système de contrôle d'accès (10) comprenant en outre au moins un capteur de signal biométrique (11) ; et un dispositif d'interface (13) adapté pour être en relation, d'une part, avec le serveur de contrôle et, d'autre part, avec le capteur ;
ledit accès étant autorisé à au moins une personne à laquelle est associée un signal de référence comprenant des informations biométriques correspondantes ;
ledit serveur de contrôle comprenant :
- une unité d'interface (121) adaptée pour recevoir un signal biométrique transformé fourni par ledit dispositif d'interface (13) ;
- une unité de gestion (123) adaptée pour gérer d'une part un paramètre, commun avec le dispositif d'interface, prenant des valeurs différentes au cours du temps, et d'autre part, une fonction de transformation non inversible, ladite fonction de transformation étant paramétrée en fonction au moins dudit paramètre commun ;
- une unité de transformation (122) adaptée pour transformer au moins un signal initial issu du au moins un signal de référence en au moins un signal de comparaison par application de la fonction de transformation audit signal initial ;
- une unité de comparaison (124) adaptée pour effectuer une comparaison du signal biométrique transformé reçu avec le au moins un signal de comparaison ; et
- une unité de décision (125) adaptée pour décider si un accès est autorisé sur la base de la comparaison effectuée par l'unité de comparaison.

15. Système de contrôle d'accès comprenant :
- un capteur de signal biométrique selon la revendication 13 ;
- un dispositif d'interface (13) selon l'une quelconque des revendications 9 à 12 ; et
un serveur de contrôle d'accès (12) selon la revendication 14.

## Claims

1. Access control method in an access control system (10) comprising:
an access control server (12) capable of controlling access;
at least one biometric signal sensor (11); and
an interface device (13) adapted to be linked, on the one hand, to the control server and on the other, to the sensor;
said access being authorized for at least one person with whom a reference signal, comprising corresponding biometric information, is associated.
the control server and the interface device, on the one hand, managing a common parameter taking different values over time, and on the other,
respectively a first and a second non-invertible transformation function, said first and second transformation functions being parameterized using at least said common parameter;
said method comprising the following steps:
/a/ at the level of the sensor, collecting a biometric signal and providing said collected biometric signal to the interface device;
/b/ at the level of the interface device, obtaining a transformed biometric signal by applying the first transformation function to an element from a group comprising at least one characteristic originating from said collected biometric signal and said collected biometric signal; and transmitting (14) said transformed biometric signal to the control server;
/c/ at the level of the control server, carrying out a comparison of the transformed biometric signal with at least one comparison signal, said comparison signal corresponding to a signal resulting from the application of the second transformation function to an initial signal originating from the reference signal; and
/d/ on the basis of said comparison, deciding if access is authorized.

2. Access control method according to claim 1, in which the values of the common parameter are a function of the values of a counter, managed at the level of the interface device and the server, of the number of transformed biometric signals which are respectively transmitted and received by the interface device and the server.

3. Access control method according to any one of the previous claims, in which the access control server and the interface device being synchronized on a common time reference, the values of the common parameter are a function of the value common time reference.

4. Access control method according to any one of the previous claims, in which the values of the common parameter are entered at the level of the interface device, and in which each new value of the common parameter is transmitted to the control server.

5. Access control method according to any one of the previous claims, in which the access control system controls access to a plurality of types of applications, and in which a plurality of pairs of a first non-invertible transformation function at the level of the interface device and of a second non-invertible transformation function at the level of the control server are respectively associated with said plurality of types of applications.

6. Access control method according to any one of the previous claims, in which the initial signal comprises the reference signal and in which the application of the first and the application of the second configured non-invertible transformation function are equivalent.

7. Access control method according to any one of the previous claims, in which the initial signal originating from the reference signal, corresponding to the at least one authorized person, is obtained by applying an initial non-invertible transformation function to the reference signal; and in which the first transformation function is equivalent to a combination of the second transformation function and said initial transformation function.

8. Access control method according to any one of the previous claims, in which an identifier is associated with the interface device and/or with the at least one person to whom access is authorized and in which the control server manages an association of the at least one comparison signal with said identifier;
said method moreover comprising, before step /c/, the following steps:
- obtaining at the level of the interface device an identifier corresponding to the collected biometric signal;
- transmitting said identifier to the control server; and
- at the level of the control server, retrieving the comparison signal associated with said received identifier.

9. Interface device (13) in an access control system (10) comprising moreover, on the one hand, an access control server (12) capable of controlling access and, on the other hand, at least one biometric signal sensor (11).
said access being authorized for at least one person with whom a reference signal, comprising the corresponding items of biometric information, is associated.
said interface device comprising:
- a management unit (133) capable of managing, on the one hand, a parameter, common to the control server, taking the different values over time, and on the other hand, a non-invertible transformation function, said transformation function being parameterized using at least said common parameter;
- a first interface unit (131) capable of receiving a biometric signal collected by the sensor;
- a transformation unit (135) capable of transforming a collected biometric signal into a transformed biometric signal by applying the transformation function to an element from a group comprising at least one characteristic originating from said collected biometric signal and said collected biometric signal; and
- a second interface unit (132) capable of cooperating with a transmission device (15) capable of transmitting a biometric signal transformed by the transformation unit to the control server.

10. Interface device (13) according to claim 9, in which the values of the common parameter are a function of the values of a counter, managed by the management unit (133), of the number of transformed biometric signals which are respectively transmitted to the server.

11. Interface device (13) according to claim 9 or 10, in which the access control server and the interface device being synchronized on a common time reference, the values of the common parameter are a function of the value of the common time reference.

12. Interface device (13) according to any of claims 9 to 11, in which the values of the common parameter are entered at the level of the interface device, and in which each new value of the common parameter is transmitted to the control server.

13. Biometric signal sensor (11) comprising an interface device according to any one of claims 9 to 12.

14. Access control server (12) in an access control system (10) comprising moreover at least one biometric signal sensor (11); and an interface device (13) capable of being linked, on the one hand, to the control server and on the other hand, to the sensor;
said access being authorized for at least one person with whom a reference signal, comprising the corresponding items of biometric information, is associated;
said control server comprising:
- an interface unit (121) capable of receiving a transformed biometric signal provided by said interface device (13);
- a management unit (123) capable of managing, on the one hand, a parameter, common to the interface device, taking different values over time, and on the other hand, a non-invertible transformation function, said transformation function being parameterized using at least said common parameter;
- a transformation unit (122) capable of transforming at least one initial signal originating from the at least one reference signal into at least one comparison signal by applying the transformation function to said initial signal;
- a comparison unit (124) capable of carrying out a comparison of the received transformed biometric signal with the at least one comparison signal; and
- a decision unit (125) capable of deciding if access is authorized on the basis of the comparison carried out by the comparison unit.

15. Access control system comprising:
- a biometric signal sensor according to claim 13;
- an interface device (13) according to any one of claims 9 to 12; and
an access control server (12) according to claim 14.

## Patentansprüche

1. Zugangskontrollverfahren in einem Zugangskontrollsystem (10), das aufweist:
einen Zugangskontrollserver (12), der geeignet ist, um einen Zugang zu kontrollieren;
mindestens einen biometrischen Signalsensor (11) ; und
eine Schnittstellenvorrichtung (13), die geeignet ist, um einerseits mit dem Kontrollserver und
andererseits mit dem Sensor in Verbindung zu stehen;
wobei der Zugang mindestens einer Person genehmigt wird, der ein Referenzsignal zugeordnet ist, das entsprechende biometrische Informationen aufweist;
wobei der Kontrollserver und die Schnittstellenvorrichtung einerseits einen gemeinsamen Parameter, der im Lauf der Zeit unterschiedliche Werte annimmt, und andererseits eine erste bzw. eine zweite nicht umkehrbare Umwandlungsfunktion verwalten, wobei die erste und zweite Umwandlungsfunktion abhängig mindestens von dem gemeinsamen Parameter parametriert werden;
wobei das Verfahren die folgenden Schritte enthält:
/a/ im Bereich des Sensors, Erfassen eines biometrischen Signals und Liefern des erfassten biometrischen Signals an die Schnittstellenvorrichtung;
/b/im Bereich der Schnittstellenvorrichtung, Erhalt eines umgewandelten biometrischen Signals, indem auf mindestens ein vom erfassten biometrischen Signal stammendes Merkmal oder auf das erfasste biometrische Signal angewendet wird; und Übertragen (14) des umgewandelten biometrischen Signals an den Kontrollserver;
/c/ im Bereich des Kontrollservers, Durchführen eines Vergleichs des umgewandelten biometrischen Signals mit mindestens einem Vergleichssignal, wobei das Vergleichssignal einem Signal entspricht, das aus der Anwendung der zweiten Umwandlungsfunktion auf ein aus dem Referenzsignal stammendes Anfangssignal resultiert; und
/d/ auf der Basis des Vergleichs, Entscheiden, ob ein Zugang genehmigt wird.

2. Zugangskontrollverfahren nach Anspruch 1, bei dem die Werte des gemeinsamen Parameters von den Werten eines Zählers, der im Bereich der Schnittstellenvorrichtung und des Servers verwaltet wird, der Anzahl von biometrischen Signalen abhängen, die von der Schnittstellenvorrichtung und dem Server übertragen bzw. empfangen werden.

3. Zugangskontrollverfahren nach einem der vorhergehenden Ansprüche, bei dem, wenn der Zugangskontrollserver und die Schnittstellenvorrichtung auf eine gemeinsame Zeitreferenz synchronisiert sind, die Werte des gemeinsamen Parameters vom Wert der gemeinsamen Zeitreferenz abhängen.

4. Zugangskontrollverfahren nach einem der vorhergehenden Ansprüche, bei dem die Werte des gemeinsamen Parameters im Bereich der Schnittstellenvorrichtung eingegeben werden, und bei dem jeder neue Wert des gemeinsamen Parameters an den Kontrollserver übertragen wird.

5. Zugangskontrollverfahren nach einem der vorhergehenden Ansprüche, bei dem das Zugangskontrollsystem den Zugang zu einer Vielzahl von Anwendungsarten kontrolliert, und bei dem eine Vielzahl von Paaren einer ersten nicht umkehrbaren Umwandlungsfunktion im Bereich der Schnittstellenvorrichtung und einer zweiten nicht umkehrbaren Umwandlungsfunktion im Bereich des Kontrollservers jeweils der Vielzahl von Anwendungsarten zugeordnet sind.

6. Zugangskontrollverfahren nach einem der vorhergehenden Ansprüche, bei dem das Anfangssignal das Referenzsignal enthält, und bei dem die Anwendung der ersten und die Anwendung der zweiten parametrierten nicht umkehrbaren Umwandlungsfunktion äquivalent sind.

7. Zugangskontrollverfahren nach einem der vorhergehenden Ansprüche, bei dem das vom Referenzsignal stammende Anfangssignal, das der mindestens einen berechtigten Person entspricht, durch eine Anwendung einer nicht umkehrbaren Anfangs-Umwandlungsfunktion an das Referenzsignal erhalten wird; und bei dem die erste Umwandlungsfunktion einer Kombination der zweiten Umwandlungsfunktion und der Anfangs-Umwandlungsfunktion entspricht.

8. Zugangskontrollverfahren nach einem der vorhergehenden Ansprüche, bei dem eine Kennung der Schnittstellenvorrichtung und/oder der mindestens einen Person zugeordnet ist, der der Zugang genehmigt wird, und bei dem der Kontrollserver eine Zuordnung des mindestens einen Vergleichssignals zur Kennung verwaltet;
wobei das Verfahren außerdem vor dem Schritt /c/ die folgenden Schritte enthält:
- Erhalt, im Bereich der Schnittstellenvorrichtung, einer Kennung entsprechend dem erfassten biometrischen Signal;
- Übertragen der Kennung an den Kontrollserver; und
- im Bereich des Kontrollservers, Abrufen des der empfangenen Kennung zugeordneten Vergleichssignals.

9. Schnittstellenvorrichtung (13) in einem Zugangskontrollsystem (10), das außerdem einerseits einen Zugangskontrollserver (12), der geeignet ist, um einen Zugang zu kontrollieren, und andererseits mindestens einen biometrischen Signalsensor (11) aufweist;
wobei der Zugang mindestens einer Person genehmigt wird, der ein Referenzsignal zugeordnet ist, das entsprechende biometrische Informationen aufweist; wobei die Schnittstellenvorrichtung aufweist:
- eine Verwaltungseinheit (133), die geeignet ist, um einerseits einen mit dem Kontrollserver gemeinsamen Parameter, der im Lauf der Zeit unterschiedliche Werte annimmt, und andererseits eine nicht umkehrbare Umwandlungsfunktion zu verwalten, wobei die Umwandlungsfunktion abhängig von mindestens dem gemeinsamen Parameter parametriert wird;
- eine erste Schnittstelleneinheit (131), die geeignet ist, um ein erfasstes biometrisches Signal vom Sensor zu empfangen;
- eine Umwandlungseinheit (135), die geeignet ist, um ein erfasstes biometrisches Signal in ein umgewandeltes biometrisches Signal umzuwandeln, indem die Umwandlungsfunktion auf mindestens ein vom erfassten biometrischen Signal stammendes Merkmal oder auf das erfasste biometrische Signal angewendet wird; und
- eine zweite Schnittstelleneinheit (132), die geeignet ist, um mit einer Übertragungsvorrichtung (15) zusammenzuwirken, die geeignet ist, um ein durch die Umwandlungseinheit umgewandeltes biometrisches Signal an den Kontrollserver zu übertragen.

10. Schnittstellenvorrichtung (13) nach Anspruch 9, bei der die Werte des gemeinsamen Parameters von den Werten eines von der Verwaltungseinheit (133) verwalteten Zählers der Anzahl von umgewandelten biometrischen Signalen abhängen, die an den Server übertragen werden.

11. Schnittstellenvorrichtung (13) nach Anspruch 9 oder 10, bei der, wenn der Zugangskontrollserver und die Schnittstellenvorrichtung auf eine gemeinsame Zeitreferenz synchronisiert sind, die Werte des gemeinsamen Parameters vom Wert der gemeinsamen Zeitreferenz abhängen.

12. Schnittstellenvorrichtung (13) nach einem der Ansprüche 9 bis 11, bei der die Werte des gemeinsamen Parameters im Bereich der Schnittstellenvorrichtung eingegeben werden, und bei der jeder neue Wert des gemeinsamen Parameters an den Kontrollserver übertragen wird.

13. Biometrischer Signalsensor (11), der eine Schnittstellenvorrichtung nach einem der Ansprüche 9 bis 12 aufweist.

14. Zugangskontrollserver (12) in einem Zugangskontrollsystem (10), der außerdem mindestens einen biometrischen Signalsensor (11) und eine Schnittstellenvorrichtung (13) aufweist, die geeignet ist, um einerseits mit dem Kontrollserver und andererseits mit dem Sensor in Verbindung zu stehen;
wobei der Zugang mindestens einer Person genehmigt wird, der ein Referenzsignal zugeordnet ist, das entsprechende biometrische Informationen aufweist;
wobei der Kontrollserver aufweist:
- eine Schnittstelleneinheit (121), die geeignet ist, um ein umgewandeltes biometrisches Signal zu empfangen, das von der Schnittstellenvorrichtung (13) geliefert wird;
- eine Verwaltungseinheit (123), die geeignet ist, um einerseits einen gemeinsamen Parameter mit der Schnittstellenvorrichtung, der im Lauf der Zeit unterschiedliche Werte annimmt, und andererseits eine nicht umkehrbare Umwandlungsfunktion zu verwalten, wobei die Umwandlungsfunktion abhängig mindestens vom gemeinsamen Parameter parametriert wird;
- eine Umwandlungseinheit (122), die geeignet ist, um mindestens ein vom mindestens einen Referenzsignal stammendes Anfangssignal in mindestens ein Vergleichssignal durch Anwendung der Umwandlungsfunktion auf das Anfangssignal umzuwandeln;
- eine Vergleichseinheit (124), die geeignet ist, um einen Vergleich des empfangenen umgewandelten biometrischen Signals mit dem mindestens einen Vergleichssignal durchzuführen; und
- eine Entscheidungseinheit (125), die geeignet ist, um auf der Basis des durch die Vergleichseinheit durchgeführten Vergleichs zu entscheiden, ob ein Zugang genehmigt wird.

15. Zugangskontrollsystem, das aufweist:
- einen biometrischen Signalsensor nach Anspruch 13;
- eine Schnittstellenvorrichtung (13) nach einem der Ansprüche 9 bis 12; und
- einen Zugangskontrollserver (12) nach Anspruch 14.
